# EUROPEAN PATENT APPLICATION

(11) **EP 3 037 687 A1**
(43) Date of publication of application: **29.06.2016**
(21) Application number: 15198437.4
(22) Date of filing: 08.12.2015
(51) Int. Cl.: F16C 33/38, F16C 33/46, F16C 33/54, F16C 33/42

(54) **A BEARING**

(30) Priority: 22.12.2014 GB 201422944
(71) Applicant: Rolls-Royce plc, London SW1E 6AT (GB)
(72) Inventor: Scothern, David P., Derby, Derbyshire DE24 8BJ (GB)
(74) Representative: Rolls-Royce plc

(57) **Abstract**

A bearing cage for an anti-friction bearing comprises a plurality of cage pockets with each cage pocket being adapted to accommodate a rolling element. Each of the cage pockets has a cylindrical profile with a corresponding cylindrical axis. The cage pockets are arranged in an alternating circumferential array of first cage pockets and second cage pockets, with the cylindrical axis of each first cage pocket intersecting with a rotational axis of the bearing cage on a first side of the bearing cage, and the cylindrical axis of each second cage pocket intersecting with the rotational axis of the bearing cage on a second opposite side of the bearing cage.

## Description

### Field of the Disclosure

The present disclosure relates to a bearing cage for an anti-friction bearing, and particularly, but not exclusively, to a bearing cage for an anti-friction bearing for use in a turbofan engine.

### Background to the Disclosure

In the following disclosure, the terms rolling element bearing and anti-friction bearing are used interchangeably.

It is well known for a rolling element bearing assembly to be provided with a bearing cage, sometimes referred to as a bearing retainer or ball separator. The main functions of the bearing cage are to separate the bearing elements from one another, and to maintain the rolling elements' symmetrical radial spacing. In many applications, the bearing cage is also used to secure the bearing components together.

A typical bearing cage is a cylindrical component having radial pockets formed therein, with a single bearing element being located within each of the pockets.

Typically, mechanical design constraints require a minimum material thickness in the circumferential direction between adjacent pockets. This constraint, in conjunction with the diameter and quantity of the bearing elements, dictates the minimum diameter of a conventional bearing assembly.

For a given load carrying capability, it is desirable to minimise the size and therefore the weight of the bearing assembly, because this allows for a corresponding reduction in the size and weight of surrounding components.

Furthermore, as shaft speed increases, so the stresses induced in the balls and the outer bearing race due to centrifugal forces become significant, which in turn limits the capability of the bearing assembly to accommodate mechanical loading. These stresses may be reduced by reducing the diameter of the bearing assembly.

One solution to reducing the diameter of a bearing assembly, while maintaining its load carrying capability, is to reduce the circumferential separation between adjacent bearing elements.

A consequence of reducing the separation between adjacent bearing elements in the bearing assembly is that the cage bars must become thinner, which will reduce the mechanical strength of the cage assembly. Cage strength may be recovered by extending the cage bars radially inwardly. However, as the cage bars extend radially inwards, so they approach one another. This represents a problem for a conventional bearing arrangement, because the process of assembling the bearing cage and rolling elements into the outer race requires that the rolling elements can all be translated radially inboard to pass under the outer race lip. Deep cage bars will intrude into the space required for this assembly.

### Statements of Disclosure

According to a first aspect of the present disclosure there is provided a bearing cage for an anti-friction bearing, the bearing cage comprising a plurality of cage pockets, each cage pocket being adapted to accommodate a rolling element,
each cage pocket having a cylindrical profile with a corresponding cylindrical axis, the cage pockets being arranged in an alternating circumferential array of first cage pockets and second cage pockets, with the cylindrical axis of each first cage pocket intersecting with a rotational axis of the bearing cage on a first side of the bearing cage, and the cylindrical axis of each second cage pocket intersecting with the rotational axis of the bearing cage on a second opposite side of the bearing cage.

The present disclosure replaces the radially oriented pockets of a conventional bearing cage with pockets that are angled such that they are on an axis which intersects with the bearing centreline at a distance from the radial plane of the bearing.

By angling the cage pockets alternately fore and aft (i.e. on opposite sides of the radial plane of the bearing assembly) the bearing cage may be provided with deeper cage bars without restricting the ability of the bearing elements to move radially inboard for assembly of the cage and bearing elements into the bearing outer race.

Optionally, the cylindrical axis of each cage pocket subtends an angle of between approximately 20° and 40° with the rotational axis of the bearing cage.

Optionally, the cylindrical axis of each cage pocket subtends an angle of approximately 30° with the rotational axis of the bearing cage.

Increasing the angle of the cylindrical axis of each cage pocket provides a corresponding increase in the depth of the cage bars and so allows for a reduction in the spacing between adjacent bearing elements.

However, the maximum angle of the cylindrical axis of each cage pocket is limited by the requirement for each of the bearing elements to be able to clear the outer race during the assembly of the bearing elements into corresponding cage pockets.

According to a second aspect of the present disclosure, there is provided an anti-friction bearing comprising:
a first raceway;
a second raceway;
a bearing cage according to the first aspect of the disclosure; and
a plurality of rolling elements,
wherein each cage pocket accommodates a corresponding one of the plurality of rolling elements.

The anti-friction bearing of the present disclosure enables an improvement in the load carrying capability of a bearing assembly of a given size by reducing the circumferential thickness of the bearing cage bars.

This is achieved by angling the cage pockets alternately fore and aft (i.e. on opposite sides of the radial plane of the bearing assembly). This in turn enables deeper cage bars to be used without restricting the ability of the bearing elements to move radially inboard for assembly of the cage and bearing elements into the bearing outer race.

Optionally, each of the plurality of rolling elements is a ball element.

In one arrangement of the disclosure, each of the rolling elements is a conventional spherical element.

In an alternative arrangement, each of the rolling elements may be a toroidal element.

Optionally, the first raceway is an outer raceway, and the second raceway is a split inner raceway.

In this arrangement, each of the bearing elements is inserted into a corresponding one of the cage pockets in a radially outward direction. With all of the bearing elements inserted into the cage, the two portions of the inner raceway may be aligned to form the assembled anti-friction bearing.

In one arrangement, the first raceway is integrally formed as a component surface such as, for example, a housing surface. Alternatively, the first raceway may be formed as a discrete component with the assembled anti-friction bearing being accommodated within a component such as a housing.

Optionally, the outer raceway is an angular contact outer raceway.

By forming the outer raceway as an angular contact raceway, the anti-friction bearing is better suited to accommodating bearing loads having an axial component.

Optionally, the first raceway is an inner raceway, and the second raceway is a split outer raceway.

In this arrangement, each of the bearing elements is inserted into a corresponding one of the cage pockets in a radially inward direction. With all of the bearing elements inserted into the cage, the two portions of the outer raceway may be aligned to form the assembled anti-friction bearing.

In applications where the inner raceway is integrally formed as a circumferentially outer surface of a shaft, the second raceway is formed as a split outer raceway. This arrangement simplifies the assembly of the anti-friction bearing.

Optionally, the inner raceway is an angular contact inner raceway.

By forming the inner raceway as an angular contact raceway, the anti-friction bearing is provided with improved handling of bearing loads with an axial component.

According to a third aspect of the present disclosure there is provided a turbofan engine comprising an anti-friction bearing according to the second aspect of the disclosure.

The illustrative aspects of the disclosure are designed to solve one or more of the problems herein described and/or one or more other problems not discussed.

### Brief Description of the Drawings

There now follows a description of an embodiment of the disclosure, by way of nonlimiting example, with reference being made to the accompanying drawings in which:
Figure 1 shows a schematic sectional view of a gas turbine engine incorporating an anti-friction bearing according to the disclosure;
Figure 2 shows a schematic perspective view of a bearing cage according to the disclosure;
Figure 3 shows a schematic plan view of the radially inner surface of the bearing cage of Figure 2;
Figure 4A shows a sectional view of a first embodiment of an anti-friction bearing of the disclosure;
Figure 4B shows a sectional view of a second embodiment of the anti-friction bearing of the disclosure;
Figure 5A shows a sectional view of a third embodiment of the anti-friction bearing of the disclosure; and
Figure 5B shows a sectional view of a fourth embodiment of the anti-friction bearing of the disclosure.

It is noted that the drawings may not be to scale. The drawings are intended to depict only typical aspects of the disclosure, and therefore should not be considered as limiting the scope of the disclosure. In the drawings, like numbering represents like elements between the drawings.

### Detailed Description

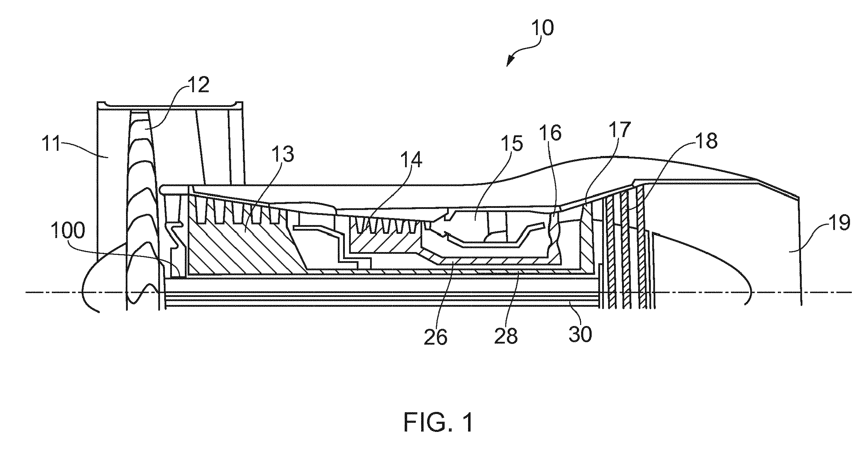

A typical turbofan gas turbine engine 10, as shown in figure 1, comprises in flow series an intake 11, a fan 12, an intermediate pressure compressor 13, a high pressure compressor 14, a combustion chamber 15, a high pressure turbine 16, an intermediate pressure turbine 17, a low pressure turbine 18 and an exhaust 19. The high pressure turbine 16 is arranged to drive the high pressure compressor 14 via a first shaft 26. The intermediate pressure turbine 17 is arranged to drive the intermediate pressure compressor 13 via a second shaft 28 and the low pressure turbine 18 is arranged to drive the fan 12 via a third shaft 30. In operation air flows into the intake 11 and is compressed by the fan 12. A first portion of the air flows through, and is compressed by, the intermediate pressure compressor 13 and the high pressure compressor 14 and is supplied to the combustion chamber 15. Fuel is injected into the combustion chamber 15 and is burnt in the air to produce hot exhaust gases which flow through, and drive, the high pressure turbine 16, the intermediate pressure turbine 17 and the low pressure turbine 18. The hot exhaust gases leaving the low pressure turbine 18 flow through the exhaust 19, and thereby provide propulsive thrust. A second portion of the air bypasses the main engine to provide propulsive thrust.

A typical turbofan engine 10 will incorporate many rolling element, or anti-friction, bearings, any one or all off which may be replaced by an anti-friction bearing according to the present disclosure.

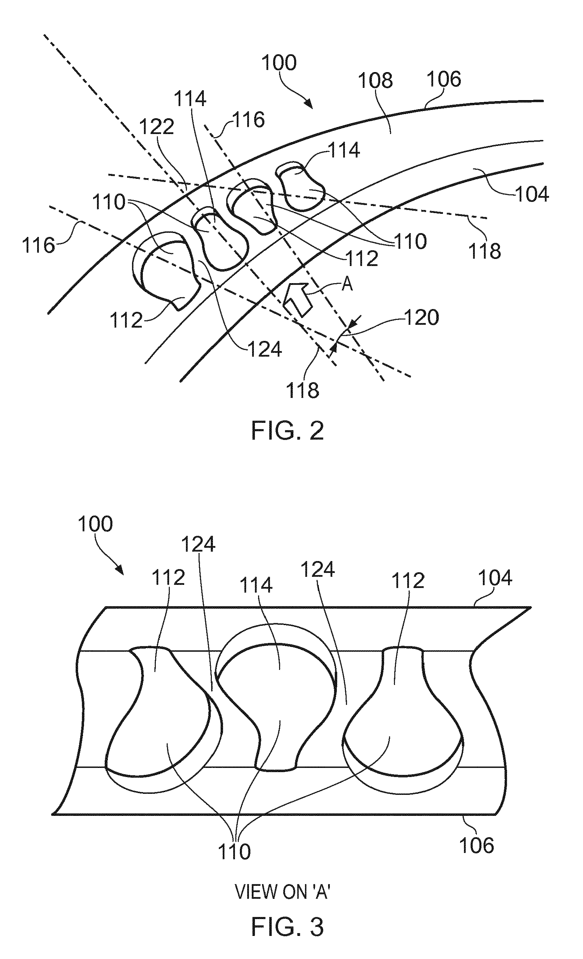

Referring to Figures 2 and 3, a bearing cage for an anti-friction bearing, according to the disclosure is designated generally by the reference numeral 100.

The bearing cage 100 has a rotational axis 102, and a first side 104 and an opposite second side 106. The rotational axis 102 corresponds to a rotational axis about which the bearing cage 100 may rotate, for example when it is assembled into an anti-friction bearing.

The bearing cage 100 comprises a plurality of cage pockets 110, each of which are disposed around a circumference 108 of the bearing cage 100. Each of the cage pockets 110 is adapted to accommodate a rolling element.

The cage pockets 110 are arranged around the circumference 108 of the bearing cage 100 in an alternating circumferential array of first cage pockets 112 and second cage pockets 114.

Each of the cage pockets 110 has a cylindrical cross-sectional profile. Each of the first cage pockets 112 has a first cylindrical axis 116, and each of the second cage pockets 114 has a second cylindrical axis 118.

Each first cage pocket 112 is angled such that the corresponding first cylindrical axis 116 intersects with the rotational axis 102 of the bearing cage 100 on the first side 104 of the bearing cage 100.

Each second cage pocket 114 is angled such that the corresponding second cylindrical axis 118 intersects with the rotational axis 102 of the bearing cage 100 on the second side 106 of the bearing cage 100.

As shown in Figure 2, each of the first cylindrical axis 116 and the second cylindrical axis 118 subtends an acute angle with the rotational axis 102 of the bearing cage 100.

Figure 3, being a radially outward view (indicated by the arrow 'A' in Figure 2) of the bearing cage 100 shows the effect of the alternating angled arrangement of the first and second cage pockets 112,114.

In one arrangement the bearing cage 100 is formed from a metal alloy, such as steel, with each of the first and second cage pockets 112,114 being machined into the bearing cage 100.

In an alternative arrangement, the bearing cage 100 may be formed as a casting such as, for example, an investment casting, with the features of the first and second cage pockets 112,114 being integrally formed as part of the casting process. In a further alternative, the bearing cage 100 may be moulded from a polymeric or composite material.

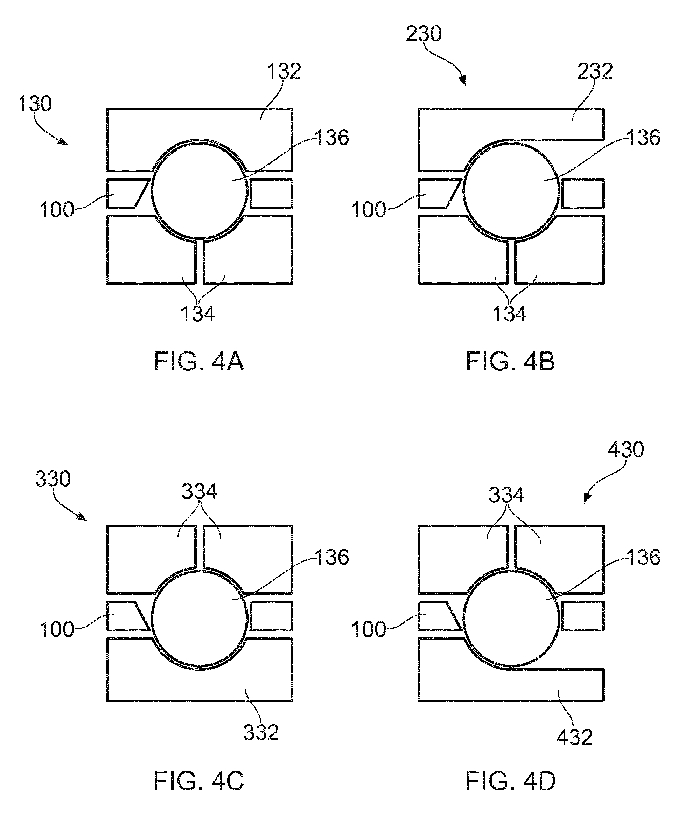

Figure 4A shows an anti-friction bearing 130according to a first embodiment of the disclosure. The anti-friction bearing 130 comprises a first raceway 132, a second raceway 134, a bearing cage 100 (described above) and a plurality of rolling elements 136.

The first raceway 132, the second raceway 134 and the rolling elements 136 are formed from conventional bearing materials such as, for example, steel or steel alloys.

The first raceway 132 is an outer raceway, and the second raceway 134 is an inner raceway. In this arrangement, the inner raceway 134 is a split raceway formed from two matching raceway halves.

To assemble the anti-friction bearing 130, the bearing cage 100 is first positioned within the outer raceway 132. Each of the plurality of rolling elements 136 is then inserted into a corresponding one of the cage pockets 110.

When all of the cage pockets 110 have been filled, the two halves of the inner raceway 134 are positioned together against the radially inner facing surfaces of the rolling elements 136.

As described above, each first cage pocket 112 is angled in the opposite sense to its neighbouring second cage pocket 114. As the first and second cage pockets 112,114 are not oriented purely radially, the degree to which they approach each other as the radius reduces is lessened in comparison with a conventional bearing cage. This allows the thickness of the cage bar 124 to be reduced, allowing the overall diameter of the assembled bearing to be reduced relative to a conventional rolling element bearing with the same number of balls of the same size.

From Figure 3, it can be seen that the "pinch point" between adjacent cage pockets 112,114 is alleviated by the alternating axial arrangement of the pockets 112,114.

Referring to Figure 4B, an anti-friction bearing according to a second embodiment of the disclosure is designated generally by the reference numeral 230. Features of the anti-friction bearing 230 which correspond to those of the anti-friction bearing 130 have been given corresponding reference numerals for ease of reference.

The anti-friction bearing 230 has a first raceway 232, a second raceway 134, a bearing cage 100 (described above) and a plurality of rolling elements 136.

The first raceway 232 is an outer raceway and is formed as an annular contact raceway. The second raceway 134, bearing cage 100 and rolling elements 136 are identical to those described above in relation to the anti-friction bearing 130.

Assembly of the anti-friction bearing 230 follows the procedure outlined above for the anti-friction bearing 130.

Referring to Figure 5A, an anti-friction bearing according to a third embodiment of the disclosure is designated generally by the reference numeral 330. Features of the anti-friction bearing 330 which correspond to those of the anti-friction bearing 130 have been given corresponding reference numerals for ease of reference.

The anti-friction bearing 330 corresponds to the anti-friction bearing 130 with the outer raceway 332 being a split raceway, and the inner raceway 334 being a unitary raceway.

Assembly of the anti-friction bearing 330 follows the procedure outlined above for the anti-friction bearing 130.

Referring to Figure 5B, an anti-friction bearing according to a fourth embodiment of the disclosure is designated generally by the reference numeral 430. Features of the anti-friction bearing 430 which correspond to those of the anti-friction bearing 130 have been given corresponding reference numerals for ease of reference.

The anti-friction bearing 430 corresponds to the anti-friction bearing 230 with the inner and outer raceways being reversed.

Assembly of the anti-friction bearing 430 follows the procedure outlined above for the anti-friction bearing 130.

The foregoing description of various aspects of the disclosure has been presented for purposes of illustration and description. It is not intended to be exhaustive or to limit the disclosure to the precise form disclosed, and obviously, many modifications and variations are possible. Such modifications and variations that may be apparent to a person of skill in the art are included within the scope of the disclosure as defined by the accompanying claims.

## Claims

1. A bearing cage for an anti-friction bearing, the bearing cage comprising a plurality of cage pockets, each cage pocket being adapted to accommodate a rolling element,
each cage pocket having a cylindrical profile with a corresponding cylindrical axis, the cage pockets being arranged in an alternating circumferential array of first cage pockets and second cage pockets, with the cylindrical axis of each first cage pocket intersecting with a rotational axis of the bearing cage on a first side of the bearing cage, and the cylindrical axis of each second cage pocket intersecting with the rotational axis of the bearing cage on a second opposite side of the bearing cage.

2. The bearing cage as claimed in Claim 1, wherein the cylindrical axis of each cage pocket subtends an angle of between approximately 20° and 40°with the rotational axis of the bearing cage.

3. The bearing cage as claimed in Claim 1, wherein the cylindrical axis of each cage pocket subtends an angle of approximately 30°with the rotational axis of the bearing cage.

4. An anti-friction bearing comprising:
a first raceway;
a second raceway;
a cage as claimed in any one of Claims 1 to 3; and
a plurality of rolling elements,
wherein each cage pocket accommodates a corresponding one of the plurality of rolling elements.

5. The anti-friction bearing as claimed in Claim 4, wherein each of the plurality of rolling elements is a ball element.

6. The anti-friction bearing as claimed in Claim 4 or Claim 5, wherein the first raceway is an outer raceway, and the second raceway is a split inner raceway.

7. The anti-friction bearing as claimed in Claim 6, wherein the outer raceway is an angular contact outer raceway.

8. The anti-friction bearing as claimed in Claim 4 or Claim 5, wherein the first raceway is an inner raceway, and the second raceway is a split outer raceway.

9. The anti-friction bearing as claimed in Claim 8, wherein the inner raceway is an angular contact inner raceway.

10. A turbofan engine comprising an anti-friction bearing as claimed in any one of Claims 4 to 9.
